**Europäisches Patentamt**

**European Patent Office**

**Office européen des brevets**

(19)

(11) Veröffentlichungsnummer: **0 238 028**
**B1**

(12) # EUROPÄISCHE PATENTSCHRIFT

(45) Veröffentlichungstag der Patentschrift:
06.09.89

(51) Int. Cl.⁴: **B01J 2/00**

(21) Anmeldenummer: **87103815.4**

(22) Anmeldetag: **16.03.87**

(54) Vorrichtung zum Granulieren, Pelletieren, Dragieren und/oder Trocknen rieselfähigen Gutes.

(30) Priorität: **17.03.86 DE 3608885**

(43) Veröffentlichungstag der Anmeldung:
**23.09.87 Patentblatt 87/39**

(45) Bekanntmachung des Hinweises auf die Patenterteilung:
**06.09.89 Patentblatt 89/36**

(84) Benannte Vertragsstaaten:
**AT CH DE FR GB IT LI NL SE**

(56) Entgegenhaltungen:
**EP-A- 0 072 467**
**DE-C- 525 474**

(73) Patentinhaber: **Hüttlin, Herbert, Daimlerstrasse 7,
D-7853 Steinen(DE)**

(72) Erfinder: **Hüttlin, Herbert, Daimlerstrasse 7,
D-7853 Steinen(DE)**

(74) Vertreter: **Wuesthoff, Franz, Dr.-Ing. et al, Patentanwälte
Wuesthoff -v. Pechmann-Behrens-Goetz
Schweigerstrasse 2, D-8000 München 90(DE)**

## Beschreibung

Die Erfindung betrifft eine Vorrichtung zum Granulieren, Pelletieren, Dragieren und/oder Trocknen rieselfähigen Gutes mit einer Trommel, die um eine mindestens annähernd waagerechte Drehachse drehantreibbar ist und einen annähernd zylindrischen Rumpf sowie zwei auf je einer Seite des Rumpfes angeordnete steile Stirnwände aufweist.

Bei bekannten Vorrichtungen dieser Gattung ist es üblich, die Trommel durch Absaugen des behandelten Gutes mittels eines Schlauches zu entleeren. Wenn jedoch das Gut, beispielsweise dragiertes Gut mit stoßempfindlicher Oberfläche, die beim Absaugen unvermeidlichen Stöße nicht verträgt, ist es mühsam und zeitraubend, die Trommel vollständig zu entleeren. Wenn die Stirnwände kegelstumpfförmig gestaltet und vom Rumpf weg axial nach außen gerichtet sind (FR-A-2 222 957) ist es grundsätzlich möglich, die Trommel zu entleeren, indem man sie schrägstellt, sodaß das Gut durch eine zentrale Öffnung in einer der Stirnwände herausrieselt. Bei anderen bekannten Vorrichtungen der genannten Gattung (EP-A-0 072 467), deren Trommel ebenfalls kegelstumpfförmige Stirnwände aufweist, die sich jedoch in den vom Rumpf umschlossenen Raum hineinerstrekken, ist eine vollständige Entleerung schwieriger, da es keine Stellung der Trommel gibt, in der das Gut ohne weiteres durch eine zentrale Öffnung in einer der Stirnwände herausrieseln könnte. Gleiches gilt auch dann, wenn die Trommel so gelagert ist, daß sie nicht gekippt werden kann.

In solchen Fällen mußte man bisher eine Auffangschale zum Entleeren derart in die Trommel einsetzen, daß das Gut bei einer bestimmten Drehrichtung der Trommel in die Auffangschale und von dort beispielsweise durch eine Rutsche nach außen gelangt. Die Auffangschale muß dann für den normalen Betrieb der Trommel wieder ausgebaut werden. Bei großen Trommeln hat eine solche Auffangschale ein so großes Gewicht, daß für ihren Einund Ausbau eine erhebliche Kraftanstrengung oder ein Hebezeug erforderlich ist.

Seit Jahrzehnten sind ferner Mischvorrichtungen bekannt (DE-C 525 474), die eine Mischtrommel und eine sich axial daran anschließende Verteilertrommel aufweisen. Diese beiden Trommeln sind entweder gemeinsam oder getrennt voneinander antreibbar; zumindest die Mischtrommel wird zum Mischen in einer Drehrichtung und zum Entleeren in entgegengesetzter Richtung angetrieben. In jedem Fall haben die beiden Trommeln eine gemeinsame, waagerechte Drehachse. Bei einer Ausführungsform hat die Mischtrommel einen zylindrischen Rumpf und eine sich daran anschließende kegelstumpfförmige Stirnwand, die ringförmig in sich geschlossen ist und eine zentrale Auslaßöffnung freiläßt.

An der Innenseite von Stirnwand und Rumpf dieser Mischtrommel sind Leitplatten derart schräg angeordnet, daß in der Mischtrommel enthaltenes Mischgut von diesen Leitplatten bei einer Drehrichtung in der Mischtrommel zurückgehalten, bei der entgegengesetzten Drehrichtung hingegen über die konische Stirnwand hinweg zur Auslaßöffnung gefördert wird, von wo das Mischgut in die Verteilertrommel fällt, um dann durch Öffnungen am Umfang oder einer Stirnfläche der Verteilertrommel in einen Aufgabetrichter zu gelangen. Bei einer anderen Ausgestaltung der Mischvorrichtung sind Mischund Verteilertrommel beide zylindrisch und aus einem Stück hergestellt und nur in einer Drehrichtung antreibbar; in diesem Fall ist in der Mischtrommel eine Schurre derart schwenkbar angeordnet, daß sie je nach ihrer Schwenkstellung Mischgut in der Mischtrommel zurückhält oder in die Verteilertrommel gelangen läßt.

Der Erfindung liegt die Aufgabe zugrunde, eine Vorrichtung der eingangs beschriebenen Gattung derart weiterzubilden, daß das Entleeren der Trommel wesentlich erleichtert wird.

Die Aufgabe ist erfindungsgemäß dadurch gelöst, daß

- mindestens eine der Stirnwände der Trommel einen radial äußeren Kranz von Ringsektoren aufweist, die einander über lappend derart schräggestellt sind, daß ihre in der Betriebsdrehrichtung der Trommel voraneilenden Ränder axial weiter außen liegen als ihre nacheilenden Ränder,

- zwischen benachbarten Ringsektoren je ein spaltartiger Durchlaß ausgebildet ist, durch den das Gut bei Rückwärtsdrehung der Trommel austreten kann, und

- an die Ringsektoren sich radial nach innen ein für das Gut undurchlässiger Mittelbereich der betreffenden Stirnwand anschließt.

Die schräggestellten Ringsektoren halten das Gut bei Betriebsdrehung im Inneren der Trommel und verstärken deren Be streben, das Gut in Drehrichtung mitzunehmen, sodaß es im Inneren der Trommel in erwünschter Weise eine von der Drehgeschwindigkeit der Trommel sowie von der Schrägstellung der Ringsektoren und schließlich auch von der Beschaffenheit des Gutes abhängige kataraktartige Bewegung ausführt. Bei dieser Bewegung rollen die einzelnen Partikel des Gutes aufeinander ab, sodaß von einer im Inneren der Trommel stattfindenden Behandlung, beispielsweise durch Aufsprühen einer klebrigen Flüssigkeit oder durch Trocknen mit erhitzter Luft, alle Partikel des Gutes weitgehend gleichmäßig betroffen sind und dadurch ein homogenes Granulat oder dgl. entsteht. Der für das Gut undurchlässige, vorzugsweise möglichst glatt gestaltete Mittelbereich der bzw. jeder mit radial äußeren Ringsektoren versehenen Stirnwand der Trommel trägt dazu bei, daß sich die kataraktartige Bewegung des Gutes innerhalb der Trommel ungehindert ausbilden kann, und verhindert selbst bei starker Füllung der Trommel, daß nennenswerte Teile des Gutes die Trommel vorzeitig verlassen. Bei Umkehr der Drehrichtung strömt dann das Gut in kurzer Zeit aus der Trommel heraus.

Wenn beide Stirnwände der Trommel erfindungsgemäß gestaltet sind, kann ein vollständiges Ausströmen des Gutes bei Rückwärtsdrehung dadurch gefördert werden, daß der Rumpf der Trommel abweichend von einem genauen Zylinder einen mittleren Bereich mit einem Innendurchmesser hat, der etwas geringer ist als der Innendurchmesser an Endbereichen des Rumpfes, an die sich je ein Kranz von Ringsektoren anschließt. Wenn aber nur eine Stirnwand der Trommel erfindungsgemäß gestaltet ist, dann wird vorzugsweise durch eine Konizität der gesamten Innenwand der Trommel für ein leichtes Gefälle zur erfindungsgemäßen Stirnwand hin gesorgt.

Vorzugsweise ist an der Trommel axial außerhalb der Ringsektoren ein ringförmiger Auffangkanal für durch die Durchlässe ausgetretenes Gut ausgebildet.

Die zwischen den Ringsektoren ausgebildeten spaltartigen Durchlässe können in besonders vorteilhafter Weise zusätzlich genutzt werden, um im Betrieb dafür zu sorgen, daß das Gut von einem Trocknungsgas gleichmäßig durchströmt wird. Zu diesem Zweck ist bei einer Weiterbildung der Erfindung axial außerhalb der Ringsektoren unterhalb der Drehachse eine Saugkammer angeordnet, die an eine Saugleitung zum Absaugen von Gas aus dem Gut anschließbar ist.

Die Saugkammer ist axial nach außen hin vorzugsweise durch eine ortsfeste Abdeckung begrenzt, welche die zugehörige Stirnwand der Trommel im wesentlichen abdeckt. Die Abdeckung bildet zugleich einen Unfallschutz, da sie verhindert, daß die Ringsektoren bei drehender Trommel unbeabsichtigt oder von Unbefugten berührt werden.

Der für das Gut undurchlässige Mittelbereich weist zweckmäßigerweise einen zentralen Deckel auf, der in Betrieb eine zentrale Öffnung der zugehörigen Stirnwand der Trommel verschließt. Der zentrale Deckel ist vorzugsweise an der Abdeckung angelenkt.

Unterhalb des zentralen Deckels ist an der Abdeckung vorzugsweise eine Entleerungsklappe angeordnet. Zum Entleeren der Trommel braucht dann nicht die Abdeckung entfernt, sondern nur die Entleerungsklappe geöffnet zu werden.

Die zentrale Öffnung ist vorzugsweise von einer ebenen Ringzone der Stirnwand umgeben, die zu deren für das Gut undurchlässigem Mittelbereich gehört.

Schließlich ist es vorteilhaft, wenn die Ringsektoren der Form eines Kegelstumpfes angenähert sind, der sich in an sich bekannter Weise (EP-A-0 072 467) in den vom Rumpf umschlossenen Raum hineinerstreckt. Dabei ergänzen sich die Mitnahmekräfte, die in Betriebsdrehrichtung der Trommel von den schräggestellten Ringsektoren auf das Gut ausgeübt werden, sowie die Einzwängung des Gutes durch die von den Ringsektoren in ihrer Gesamtheit gebildete Kegelform, die ebenfalls die Mitnahme des Gutes durch die sich drehende Trommel fördert.

Ausführungsbeispiele der Erfindung werden im folgenden anhand schematischer Zeichnungen mit weiteren Einzelheiten erläutert.

Es zeigt:

Fig. 1 eine Stirnansicht einer zum Granulieren, Pelletieren, Dragieren oder Trocknen rieselfähigen Gutes geeigneten Vorrichtung in normalem Betrieb,

Fig. 2 eine entsprechende Stirnansicht der Vorrichtung bei ihrer Entleerung,

Fig. 3 den senkrechten Axialschnitt III-III in Fig. 1,

Fig. 4 den Radialschnitt IV-IV in Fig. 3,

Fig. 5 den axialen Teilschnitt V-V in Fig. 1 und

Fig. 6 einen der Fig. 3 entsprechenden Axialschnitt einer abgewandelten Ausführungsform.

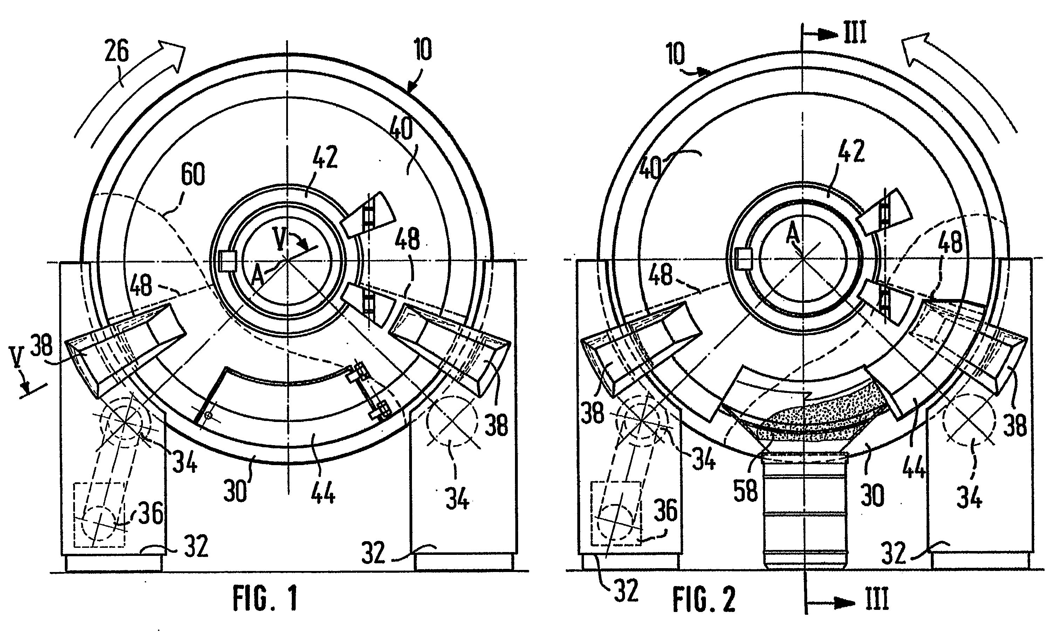

Die in Fig. 1 bis 5 dargestellte Vorrichtung hat eine Trommel 10, die um eine waagerechte Drehachse A drehbar ist und einen doppelwandigen Rumpf 12 sowie ein Paar Stirnwände 14 aufweist. Der Rumpf 12 ist außen zylindrisch und innen derart doppelkegelförmig, daß sein Innendurchmesser in seinem mittleren Bereich am kleinsten ist und sich zu den beiden Stirnwänden 14 hin gleichmäßig vergrößert.

Die beiden Stirnwände 14 haben je eine kreisförmige zentrale Öffnung 16, die von einer ebenen, glatten Ringzone 18 sowie weiter radial außen von einem Kranz aus im dargestellten Beispiel acht Ringsektoren 20 umgeben ist. Der Abstand der beiden ebenen Ringzonen 18 voneinander ist erheblich kleiner als der kleinste Innendurchmesser des Rumpfes 12; zweckmäßigerweise beträgt das Verhältnis dieses Abstandes zum Innendurchmesser etwa 1:3 bis 2:3; im dargestellten Beispiel ist es 1:2.

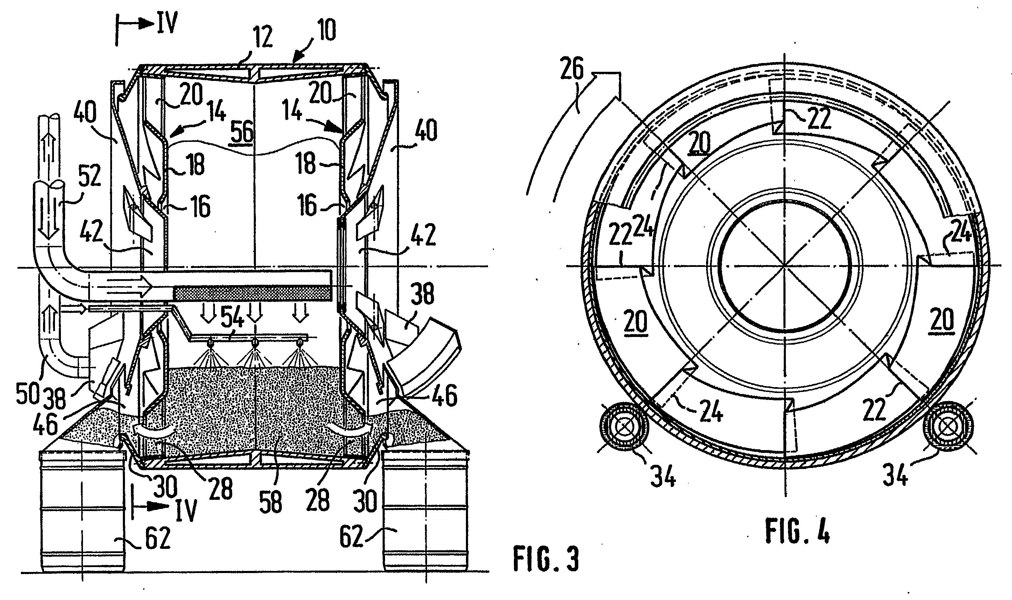

Die Ringsektoren 20 überlappen einander und sind in der Art von Gebläseschaufeln derart schräggestellt, daß ihre bei normaler Betriebsdrehrichtung der Trommel 10 voraneilenden Ränder 22 weiter außen angeordnet sind als ihre nacheilenden Ränder 24. Die Betriebsdrehrichtung ist in Fig. 1 und 4 mit je einem Pfeil 26 angedeutet. Zwischen je zwei aufeinanderfolgenden Ringsektoren 20 ist ein spaltartiger Durchlaß 28 freigelassen; jede der beiden Stirnwände 14 hat somit acht solche Durchlässe 28, die sich über ungefähr ein Drittel des Radius der Trommel vom Rumpf 12 bis zur zugehörigen ebenen Ringzone 18 erstrekken, die abgesehen von ihrer zentralen Öffnung 16 in sich geschlossen ist.

Die Ringsektoren 20 jeder der beiden Stirnwände 14 bestehen mit der zugehörigen ebenen Ringzone 18 vorzugsweise aus einem Stück oder sind mit dieser verschweißt; außerdem sind die Ringsektoren 20 jeder der beiden Stirnwände 14 mit einem axial äußeren ringförmigen Auffangkanal 30 verschweißt, der an dem Rumpf 12 zentriert und angeschraubt ist. Anstelle des dargestellten Rumpfes 12 läßt sich ein breiterer oder schmalerer Rumpf zwischen den Stirnwänden 14 anordnen.

Die so ausgestaltete Trommel 10 ist in einen Zwischenraum zwischen zwei Ständer 32 eingesetzt, die je ein Rollenpaar 34 tragen, an denen der Rumpf 12 mit seiner zylindrischen Außenseite abwälzbar ist. Eines der beiden Rollenpaare 34 ist mittels eines Getriebemotors 36 drehantreibbar.

Von jedem der beiden Ständer 32 erstreckt sich ein die Trommel 10 umgreifendes Paar hohler Arme 38 radial in Richtung zur Drehachse A. Die hohlen Arme 38 sind lösbar an je einem der Ständer 32 befestigt und tragen zwei ringförmige Abdeckungen 40, die an je einer Seite der Trommel 10 in geringem Abstand vpm der betreffenden Stirnwand 14 angeordnet sind, diese vollständig abdecken und den Rand des zugehörigen Auffangkanals 30 derart übergreifen, daß sie mit ihm eine Art berührungsfreie Labyrinthdichtung bilden.

An den beiden Abdeckungen 40 ist je ein zentraler Deckel 42 angelenkt, der in geschlossenem Zustand berührungsfrei abdichtend in die zentrale Öffnung 16 der zugehörigen Stirnwand 14 eingreift und zusammen mit deren ebener Ringzone 18 einen im wesentlichen ebenen, dichten Mittelbereich bildet. Jeder der beiden Abdeckungen 40 weist ferner unterhalb ihres zentralen Deckels 42 eine ringsektorförmige Entleerungsklappe 44 auf.

Ebenfalls in einem Bereich unter der Drehachse A ist angrenzend an die beiden Kränze von Ringsektoren 20 je eine ringsektorförmige Saugkammer 46 ausgebildet, die axial nach außen von der zugehörigen Abdeckung 40 sowie in Drehrichtung der Trommel 10 nach vorne und hinten durch je eine radiale Wand 48 begrenzt ist. Die beiden Saugkammern 46 sind durch die Paare hohler Arme 38 miteinander verbunden und über eine gemeinsame Saugleitung 50 an die Saugseite eines nicht dargestellten Gebläses angeschlossen.

Von den beiden zentralen Deckeln 42 ist im dargestellten Beispiel der in Fig. 3 rechte Deckel mit einem Schauglas versehen, während der linke Deckel Durchlässe aufweist, durch die eine Frischgasleitung 52 sowie eine Flüssigkeitsleitung 54 in den von der Trommel 10 umschlossenen Raum 56 hineinragen. Der Raum 56 ist teilweise mit zu behandelndem Gut 58 gefüllt.

Die Behandlung kann darin bestehen, daß Starterkerne, die durch den in Fig. 3 rechten Deckel 42 eingebracht worden sind, bei in Richtung des Pfeiles 26 angetriebener Trommel 10 abwechselnd mit einer Flüssigkeit aus der Flüssigkeitsleitung 54 besprüht und mit warmer trockener Luft aus der Frischgasleitung 52 getrocknet werden, wodurch das Gut 58 entsteht und allmählich an Menge zunimmt. Das Gut 58 wird von der Trommel 10 bei deren Drehung mitgenommen und bildet einen Katarakt, dessen Oberfläche 60 in Fig. 1 und 3 angedeutet ist. Verbrauchte, mit Feuchtigkeit gesättigte Luft wird teils durch das Gut 58 hindurch und teils unmittelbar über dessen Oberfläche 60 in die Saugkammern 46 abgesaugt, an denen sich die Durchlässe 28 nacheinander vorbeibewegen.

Wenn das Gut 58 fertigbehandelt ist, wird die Drehrichtung der Trommel 10 umgekehrt, wie in Fig. 2 angedeutet. Bei Rückwärtsdrehung wird das Gut 58 von den Ringsektoren 20 axial nach außen gefördert, sodaß es in die ringförmigen Auffangkanäle 30 rieselt und von dort in Behälter 62 fällt.

Es genügt grundsätzlich, wenn nur eine der beiden Stirnwände 14 in der beschriebenen Weise einen Kranz Ringsektoren 20 mit dazwischen ausgebildeten Durchlässen 28 aufweist. In diesem Fall kann die Trommel 10 nur durch diese eine Stirnwand entlüftet und entleert werden; es ist dann zweckmäßig, wenn der Innendurchmesser des Rumpfes 12 sich zu der betreffenden Stirnwand hin stetig vergrößert. Im allgemeinen ist jedoch die dargestellte Anordnung mit zwei Kränzen von Ringsektoren vorzuziehen, da sie eine gründlichere Durchlüftung und raschere Entnahme des Gutes 58 ermöglicht.

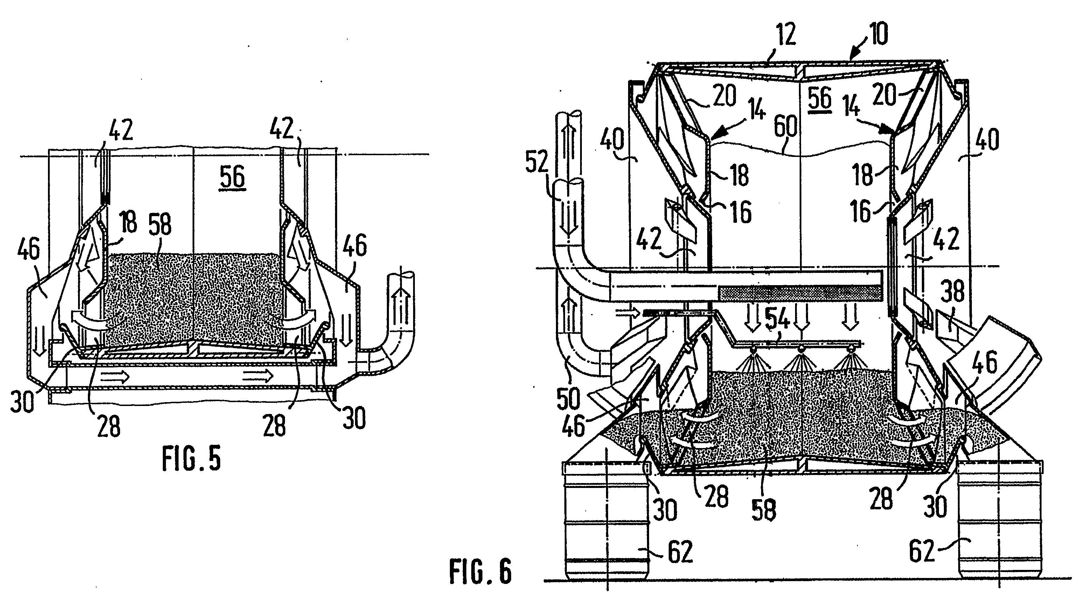

Von der anhand der Fig. 1 bis 5 im vorstehenden beschriebenen Ausführungsform unterscheidet sich die in Fig. 6 dargestellte im wesentlichen dadurch, daß die propellerartig schräggestellten Ringsektoren 20 jeder der beiden Stirnwände 14 zusätzlich axial nach innen geneigt sind, so daß sie einen axial nach innen ragenden Kegelstumpf bilden.

**Patentansprüche**

1. Vorrichtung zum Granulieren, Pelletieren, Dragieren und/oder Trocknen rieselfähigen Gutes mit einer Trommel (10), die um eine mindestens annähernd waagerechte Drehachse (A) drehantreibbar ist und einen annähernd zylindrischen Rumpf (12) sowie zwei auf je einer Seite des Rumpfes (12) angeordnete steile Stirnwände (14) aufweist, dadurch **gekennzeichnet,** daß
   - mindestens eine der Stirnwände (14) der Trommel (10) einen radial äußeren Kranz von Ringsektoren (20) aufweist, die einander überlappend derart schräggestellt sind, daß ihre in der Betriebsdrehrichtung (26) der Trommel (10) voraneilenden Ränder (22) axial weiter außen liegen als ihre nacheilenden Ränder (24),
   - zwischen benachbarten Ringsektoren (20) je ein spaltartiger Durchlaß (28) ausgebildet ist, durch den das Gut (58) bei Rückwärtsdrehung der Trommel (10) austreten kann, und
   - an die Ringssektoren (20) sich radial nach innen ein für das Gut (58) undurchlässiger Mittelbereich (18, 42) der betreffenden Stirnwand (14) anschließt.

2. Vorrichtung nach Anspruch 1, dadurch **gekennzeichnet,** daß der Rumpf (12) der Trommel (10) einen mittleren Bereich mit einem Innendurchmesser hat, der etwas geringer ist als der Innendurchmesser an Endbereichen der Trommel (10), an die sich je ein Kranz von Ringsektoren (20) anschließt.

3. Vorrichtung nach Anspruch 1 oder 2, dadurch **gekennzeichnet,** daß an der Trommel (10) axial außerhalb der Ringsektoren (20) ein ringförmiger Auffangkanal (30) für durch die Durchlässe (28) ausgetretenes Gut (58) ausgebildet ist.

4. Vorrichtung nach einem der Ansprüche l bis 3, dadurch **gekennzeichnet,** daß axial außerhalb der Ringsektoren (20) unterhalb der Drehachse (A) eine Saugkammer (46) angeordnet ist, die an eine Saugleitung (50) zum Absaugen von Gas aus dem Gut (58) anschließbar ist.

5. Vorrichtung nach Anspruch 4, dadurch **gekennzeichnet,** daß die Saugkammer (46) axial nach außen hin durch eine ortsfeste Abdeckung (40) begrenzt ist, welche die zugehörige Stirnwand (14) der Trommel (10) im wesentlichen abdeckt.

6. Vorrichtung nach einem der Ansprüche 1 bis 5, dadurch **gekennzeichnet,** daß der für das Gut (58) undurchlässige Mittelbereich (18, 42) einen zentralen Deckel (42) aufweist, der im Betrieb eine zentrale Öffnung (16) der zugehörigen Stirnwand (14) der Trommel (10) verschließt.

7. Vorrichtung nach den Ansprüchen 5 und 6, dadurch **gekennzeichnet,** daß der zentrale Dekkel (42) an der Abdeckung (40) angelenkt ist.

8. Vorrichtung nach Anspruch 6 oder 7,
dadurch **gekennzeichnet,** daß unterhalb des zentralen Deckels (42) an der Abdeckung (40) eine Entleerungsklappe (44) angeordnet ist.

9. Vorrichtung nach einem der Ansprüche 6, 7 oder 8,
dadurch **gekennzeichnet,** daß die zentrale Öffnung (16) von einer ebenen Ringzone (18) der Stirnwand (14) umgeben ist.

10. Vorrichtung nach einem der Ansprüche 1 bis 9, dadurch **gekennzeichnet,** daß die Ringsektoren (20) der Form eines Kegelstumpfes angenähert sind, der sich in den vom Rumpf (12) umschlossenen Raum (56) hineinerstreckt.

## Claims

1. An apparatus for granulating, pelleting, coating and/or drying fluid materials, comprising a drum (10) adapted to be driven in rotation about an at least approximately horizontal axis of rotation (A) and having an at least approximately cylindrical body (12) and two steep end walls (14), one at each side of the body (12), characterized in
– that at least one of the end walls (14 ) of the drum (10) comprises a radially outer crown of ring sectors (20) being inclined in overlapping relationship such that their leading edges (22) in the operating direction of rotation (26) of the drum (10) are disposed axially further outside than their trailing edges (24),
– that a gap-like passage (28) each is formed between adjacent ring sectors (20) through which passages the material (58) may exit upon reverse rotation of the drum (10), and
– that the ring sectors (20) are followed radially inwardly by a central portion (18, 42) of the respective end wall (14) which portion is not penetrable by the material (58).

2. The apparatus as claimed in claim 1, characterized in that the body (12) of the drum (10) has a central zone the inner diameter of which is somewhat smaller than the inner diameter at end sections of the drum (30) each of which is bordered by a crown of ring sectors (20).

3. The apparatus as claimed in claim 7 or 2, characterized in that an annular collecting channel (30) is formed at the drum (10) axially outside of the ring sectors (20) for material (58) which exited through the passages (28).

4. The apparatus as claimed in one of claims 1 to 3, characterized in that a suction chamber (46) is arranged axially outside of the ring sectors (20) below the axis of rotation (A) and is adapted to be connected to a suction conduit (50) for sucking gas out of the material (58).

5. The apparatus as claimed in claim 4, characterized in that the suction chamber (46) is defined axially outwardly by a stationary hood (40) which substantially covers the respective end wall (14) of the drum (10).

6. The apparatus as claimed in one of claims 1 to 5, characterized in that the central portion (18, 42) which is not penetrable by the material (58) comprises a central cover (42) which, in operation , seals a central aperture (16) formed in the corresponding end wall (14) of the drum (10).

7. The apparatus as claimed in claims 5 and 6, characterized in that the central cover (42) is pivoted at the hood (40).

8. The apparatus as claimed in claim 6 or 7, characterized in that a discharge flap (44) is disposed at the hood (40) below the central cover (42).

9. The apparatus as claimed in one of claims 6, 7, or 8, characterized in that the central aperture (16) is surrounded by a planar annular zone (78) of the end wall (14).

10. The apparatus as claimed in one of claims 1 to 9, characterized in that the ring sectors (20) are designed to approach the form of a frustum which extends into the space (56) enclosed by the body (12).

## Revendications

1. Installation pour mettre sous forme de granules, de boulets, de dragées et/ou pour sécher une matière fluide, comportant un tambour (10), qui peut être entraîné en rotation autour d'un axe (A) au moins approximativement horizontal ainsi qu'une coque (12) approximativement cylindrique et deux parois frontales (14) fortement inclinées et disposées respectivement de part et d'autre de la coque (12), caractérisée en ce que:
– au moins une des parois frontales (14) du tambour (10) comporte une couronne radialement extérieure de secteurs annulaires (20) qui sont disposés en oblique et se chevauchent mutuellement de telle sorte que leurs bords antérieurs (22) dans le sens de rotation de service (26) du tambour (10) soient placés axialement plus loin vers l'extérieur que leurs bords postérieurs (24),
– il est prévu respectivement entre deux secteurs annulaires adjacents (20) un passage (28) en forme d'intervalle par lequel la matière (58) peut sortir lors d'une rotation du tambour (10) vers l'arrière, et
– il est prévu à la suite des secteurs annulaires (20), radialement vers l'intérieur, une zone centrale (18, 42), intraversable par la matière (48), de la paroi frontale (14).

2. Installation selon la revendication 1, caractérisée en ce que la coque (12) du tambour (10) comporte une zone centrale d'un diamètre intérieur légèrement plus petit que le diamètre intérieur des zones extrêmes du tambour (10) respectivement suivies par une couronne de secteurs annulaires (20).

3. Installation selon la revendication 1 ou 2, caractérisée en ce qu'il est prévu sur le tambour (10), axialement à l'extérieur des secteurs annulaires (20), un canal récepteur (30) de forme annulaire pour la matière (58) sortant des passages (28).

4. Installation selon une des revendications 1 à 3, caractérisée en ce qu'il est prévu, axialement à l'extérieur des secteurs annulaires (20) et en dessous de l'axe de rotation (A), une chambre d'aspiration (46) qui peut être reliée à un conduit d'aspiration (50) en vue d'une aspiration de gaz à partir de la matière (58).

5. Installation selon la revendication 4, caractérisée en ce que la chambre d'aspiration (46) est délimitée axialement vers l'extérieur par un recouvrement (40) placé en position fixe et qui recouvre sensiblement la paroi frontale associée (14) du tambour (10).

6. Installation selon une des revendications 1 à 5, caractérisée en ce que la zone centrale (18, 42), intraversable par la matière (58), comporte un couvercle central (42) qui, en service, obture une ouverture centrale (16), de la paroi frontale associée (14) du tambour (10).

7. Installation selon les revendications 5 et 6, caractérisée en ce que le couvercle central (42) est articulé sur le recouvrement (40).

8. Installation selon la revendication 6 ou 7, caractérisée en ce qu'il est prévu en dessous du couvercle central (42), sur le recouvrement (40), une trappe de vidage (44).

9. Installation selon une des revendications 6, 7 ou 8, caractérisée en ce que l'ouverture centrale (16) est entourée par une zone annulaire plane (18) de la paroi frontale (14).

10. Installation selon une des revendications 1 à 9, caractérisée en ce que les secteurs annulaires (20) ont approximativement la forme d'un tronc de cône, qui s'étend dans le volume (56) entouré par la coque (12).

FIG. 1

FIG. 2

FIG. 4

FIG. 3

FIG.5

FIG.6